# EUROPÄISCHE PATENTSCHRIFT

(11) **EP 4 146 572 B1**
(45) Veröffentlichungstag und Bekanntmachung des Hinweises auf die Patenterteilung: **30.04.2025**
(21) Anmeldenummer: 21726322.7
(22) Anmeldetag: 06.05.2021
(51) Int. Cl.: B65G 15/24, B65G 21/06, B65G 21/12, B65G 41/00, G01G 11/00, G01G 21/23

(54) **FÖRDERSYSTEM**
CONVEYING SYSTEM
SYSTÈME DE TRANSPORT

(30) Priorität: 07.05.2020 DE 102020112457
(43) Veröffentlichungstag der Anmeldung: 15.03.2023
(73) Patentinhaber: WIPOTEC GmbH, 67657 Kaiserslautern (DE)
(72) Erfinder: DÜPPRE, Theo, 67663 Kaiserslautern (DE); KÜHN, Jens, 55595 Bockenau (DE); SCHULZKI, Alexander, 67705 Stelzenberg (DE); JOACHIM, Matthias, 66953 Pirmasens (DE)
(74) Vertreter: Eder Schieschke & Partner mbB
(86) Internationale Anmeldenummer: PCT/DE2021/100415
(87) Internationale Veröffentlichungsnummer: WO 2021/223815

(56) Entgegenhaltungen:
- EP-A1- 1 013 552
- EP-A1- 3 476 774
- CN-A- 105 905 532
- CN-U- 207 174 857
- DE-A1- 102010 050 524
- DE-A1- 102013 203 459
- JP-A- 2016 003 917

## Beschreibung

Die vorliegende Erfindung betrifft ein Fördersystem mit wenigstens einem Bandkörper, nach dem Oberbegriff des Anspruchs 1.

Solche Fördersysteme werden auch für die industrielle Fertigung von Produkten eingesetzt, die mithilfe eines oder mehrerer hintereinander liegender Bandkörper entlang einer Produktionsstrecke gefördert werden. Jeder Bandkörper umfasst dabei ein Endlosband, welches um Umlenkelemente, insbesondere Rollen oder Umlenkkanten, geführt wird und dabei ein Obertrum und ein darunter liegendes Untertrum ausbildet (der Begriff Endlosband steht im Folgenden auch für vergleichbare Transportelemente, wie etwa einen oder mehrere Riemen, Gurte, Ketten etc.). Die Rollen bzw. Umlenkkanten werden von einem Rahmen getragen. Die wenigstens eine Rolle des Bandkörpers kann angetrieben sein, beispielsweise mittels eines unterhalb des Bandkörpers angeordneten Motors, der über einen Zahnriemen mit der Rolle gekoppelt ist.

Oft sind entlang der Produktionsstrecke auch Wägesysteme in das Fördersystem einbezogen, wobei ein von einer Wägezelle getragenes Wägeband (nachfolgend auch als Wägebandkörper bezeichnet) ein zu wiegendes Produkt von einem stromaufwärts angeordneten Bandkörper empfängt und an einen stromabwärts angeordneten Bandkörper übergibt.

Die hintereinander liegenden Bandkörper müssen in der Höhe, in der Neigung und im Abstand zueinander ausgerichtet werden, um den Übergang der Produkte von einem Bandkörper auf den nächsten möglichst stoßfrei zu gestalten. Insbesondere die Übergabe eines Produktes auf einen Wägebandkörper soll möglichst störungsfrei erfolgen, d.h. ohne dass die Wägezelle dabei durch Stöße oder Schläge beaufschlagt wird.

Im Stand der Technik ist es bekannt, unterhalb der Bandkörper ein Untergestell vorzusehen, an dem ein jeweils mit einem Bandkörper verbundenes Chassis befestigt werden kann. Über geeignete Stellschrauben oder Langlochkonstruktionen lassen sich die Bandkörper relativ zum Untergestell, und damit auch relativ zu benachbarten weiteren Bandkörpern, ausrichten. Oft ist das Untergestell bzw. das Chassis jedoch schwer zugänglich und das Ausrichten daher mühsam und zeitaufwendig.

Als Alternative weniger geeignet sind rohrförmige Montagestangen, um die Bandkörper daran zu befestigen. Über Klemmschellen, welche die Stange umgreifen und am jeweiligen Chassis eines Bandkörpers angreifen müssten, könnten die einzelnen Bandkörper in Förderrichtung zwar längsverschieblich positioniert werden. Aber die Klemmschellen sind in der Handhabung unpraktisch, und die Montagestangen beanspruchen vergleichsweise viel Platz quer zur Förderrichtung. Außerdem ist die Steifigkeit solcher Stangen möglicherweise ungenügend, wenn sich die Stange entlang des gesamten Fördersystems erstreckt und dabei vom Gewicht der Bandkörper verbogen wird. Kreisförmige Stangen-Querschnitte erfordern außerdem zusätzliche Maßnahmen, um Schwenkbewegungen der Klemmschellen um die Stangenachse sicher zu unterbinden.

Aus der EP 1 013 552 A1 ist ein Fördersystem nach dem Oberbegriff des Anspruchs 1 bekannt, bei dem ein Bandkörper auf eine Rahmenkonstruktion aufgesetzt und über eine zu verschraubende Trägerplatte fixiert ist. Die vereinfachte Ausrichtung und platzsparende Anordnung mehrerer Bandkörper zueinander bzw. hintereinander wird durch diese Art der Befestigung jedoch nicht unterstützt.

Aufgabe der Erfindung ist es daher, ein Fördersystem anzubieten, welches die vorgenannten Nachteile beseitigt und die schnelle und genaue Ausrichtung von Bandkörpern zueinander ermöglicht.

Die Aufgabe wird gelöst durch ein Fördersystem nach Anspruch 1. Weitere vorteilhafte Ausführungsformen ergeben sich aus den Unteransprüchen.

Die Erfindung geht von der Erkenntnis aus, Bandkörper eines Fördersystems besonders einfach und insbesondere in Höhenrichtung genau positionieren zu können mithilfe von Befestigungsschienen, die sich in Förderrichtung entlang der Bandkörper erstrecken und die einen besonders einfach nutzbaren Klemmabschnitt zur Befestigung von Bandkörpern aufweisen. Die Bandkörper lassen sich über geeignete Befestigungsmittel auf die Klemmabschnitte der Schienen aufsetzen und durch einfache Klemmmittel fixieren. Neben der Befestigung von Bandkörpern erlauben die Schienen auch die Befestigung weiterer Komponenten entlang des Förderweges auf einfache Weise (Lichtschranken, Behälter, Auswerfer, etc.). Der nachfolgend benutzte Begriff "Schienen" soll dabei verdeutlichen, dass es sich um Träger handelt, die sich entlang des Förderweges erstrecken und an im Grunde frei wählbaren Positionen entlang des Förderweges das Aufsetzen und die Befestigung von mehreren in Förderrichtung hintereinander liegenden Bandkörpern auf der gleichen Schiene ermöglichen. Die Schienen geben insbesondere die Höhenposition der mit ihr zu verbindenden Komponente gemeinsam für alle diese Komponenten weitgehend vor. Die Anordnung mehrerer Bandkörper in Förderrichtung hintereinander auf den von den Bandkörpern gemeinsam genutzten Schienen führt dazu, dass die Bandkörper in Höhenrichtung relativ zueinander bereits gut ausgerichtet sind auf einem Höhenniveau, welches durch die Lage des Klemmabschnitts bzw. der Oberkante jeder Schiene entlang des Förderweges bereits vorgegeben ist. Anders als im Stand der Technik muss nicht jeder Bandkörper individuell über sein Chassis am Untergestell ausgerichtet werden, um mit einem benachbarten Bandkörper zu fluchten. Stattdessen können die Bandkörper über geeignete Befestigungsmittel auf die gemeinsam genutzten Schienen aufgesetzt und dort befestigt werden, was schnell und mit geringem Aufwand möglich ist.

Ein erfindungsgemäßes Fördersystem erstreckt sich in einer Förderrichtung X, einer dazu orthogonalen Querrichtung Y und einer zu beiden Richtungen orthogonalen, in der Regel senkrechten Höhenrichtung Z. Das Fördersystem umfasst wenigstens einen Bandkörper mit einem Endlosband, welches um eine oder mehrere Rollen geführt wird. Vorzugsweise umfasst das Fördersystem genau zwei oder auch mehr als zwei Rollen, die das Endlosband umläuft. Das Endlosband bildet dabei ein im Wesentlichen die Oberseite des Bandkörpers darstellendes Obertrum und ein üblicherweise parallel dazu verlaufendes Untertrum, wobei das Obertrum Güter in Förderrichtung X transportieren soll. In der Regel sind Obertrum und Untertrum weitgehend parallel zu einer Horizontalen, die beispielsweise durch den Hallenboden am Aufstellungsort des Fördersystems definiert sein kann. Die Höhenpositionen des Obertrums und des Untertrums definieren zwischen sich einen Höhenabschnitt H. (Für den Fall, dass Obertrum und Untertrum zur Horizontalen geneigt sind, soll sich der Höhenabschnitt vom tiefsten Punkt des Untertrums bis zum höchsten Punkt des Obertrums erstrecken) Erfindungsgemäß sind wenigstens zwei Befestigungsschienen (nachfolgend auch nur als "Schienen" bezeichnet) vorgesehen, die sich in einer Längsrichtung parallel zur Förderrichtung des Fördersystems erstrecken. Jede Schiene umfasst an ihrem in Höhenrichtung Z gesehen oberen Endbereich einen Klemmabschnitt, der zur Befestigung des Bandkörpers dient. Der Klemmabschnitt wird in Querrichtung Y von zwei zueinander parallelen Seitenflächen begrenzt, die sich jeweils in X-Z- Richtung erstrecken und zwischen sich die Dicke des Klemmabschnitts in Querrichtung bestimmen. Vorzugsweise beträgt der Abstand der beiden Seitenflächen bzw. die Dicke des Klemmabschnitts nur wenige Millimeter, bevorzugt weniger als 10mm, höchst bevorzugt weniger als 5mm, beispielsweise 3mm. Dadurch nimmt der Klemmabschnitt in Querrichtung Y wenig Raum ein, anders als beispielsweise ein rohrförmiger Träger. Die Ausdehnung der Schiene oder ihres Klemmabschnitts in Höhenrichtung Z ist vorzugsweise deutlich größer als ihre Dicke in Querrichtung Y. Sie ist dadurch besonders biegesteif gegen Kräfte in Höhenrichtung Z, und zugleich in Querrichtung Y schmal, um in dieser Richtung wenig Bauraum zu beanspruchen.

In einer bevorzugten Ausführungsform der Erfindung wird der Klemmabschnitt gebildet mit bzw. als Teil von einer in Z-Richtung aufragenden, vorzugsweise metallischen Platte, insbesondere als Schenkel einer Schiene mit L- oder U- Profil. Der oberste Abschnitt der Platte bzw. des Schenkels entspricht dann dem Klemmabschnitt, der nach oben von einer Oberkante abgeschlossen wird. Die Platte oder Schiene kann im unteren Bereich beispielsweise rechtwinklig abgewinkelt sein, um an einem Untergestell des Fördersystems befestigt zu werden. Dazu können Langlöcher oder andere, dem Fachmann bekannte Fixiermittel verwendet werden, um die Schiene auszurichten. Ein U-Profil könnte mit seinen beiden Schenkeln beide Schienen gleichzeitig ausbilden, während der Scheitel des U-Profils in Querrichtung Y unter dem Bandkörper hindurchführt. Die Schiene kann zum Beispiel als - vorzugsweise abgewinkeltes - Blech ausgebildet sein.

Der Klemmabschnitt ist erfindungsgemäß dazu ausgebildet, geeignete Befestigungsmittel aufzunehmen, die ihrerseits mit dem Bandkörper verbunden sind. Bevorzugt sind die Befestigungsmittel in einer senkrechten Abwärtsbewegung von oben auf den Klemmabschnitt aufsetzbar bzw. in umgekehrter Richtung davon lösbar. Die Befestigungsmittel müssen den Klemmabschnitt dabei nicht untergreifen. Aufgrund der parallelen Seitenflächen bildet der Klemmabschnitt ein Befestigungsprofil aus, welches Schwenkbewegungen des Befestigungsmittels um eine in Förderrichtung gedachte Achse des Klemmabschnitts formschlüssig unterbindet, anders als bei einer als Träger ausgebildeten Stange mit Rundquerschnitt.

Bevorzugt ist das Befestigungsmittel um eine in Querrichtung Y verlaufende Achse ausgebildet und hat quer zu dieser Achse einen rechteckigen oder - bevorzugt - runden Querschnitt. Derartige Profile sind kostengünstig erhältlich. Erfindungsgemäß ist im Befestigungsmittel ein nach unten offener Schlitz ausgebildet zur Aufnahme des Klemmabschnitts. Für eine besonders sichere Verbindung zwischen Klemmabschnitt und Befestigungsmittel beträgt die Schlitzbreite nur wenig mehr als die Y-Dicke des Klemmabschnitts. Das Befestigungsmittel (gemeinsam mit dem daran befestigten Bandkörper) lässt sich dann in einer einfachen Abwärtsbewegung von oben auf den nach oben aufragenden Klemmabschnitt so aufsetzen, dass dieser in den Schlitz eingreift (vorzugsweise bis zum Grund des Schlitzes, sodass das Befestigungsmittel auf der Oberkante der Schiene aufliegt). Das geschlitzte Befestigungsmittel übergreift den Klemmabschnitt dabei beidseitig und ist so gegen Seitwärtsbewegungen in Querrichtung Y stabilisiert. Vorzugsweise ist der Bandkörper mit mehreren Befestigungsmitteln ausgestattet, beispielsweise auf jeder Seite zwei, sodass jede der beiden Schienen mit ihren Klemmabschnitten in jeweils zwei Befestigungsmittel bzw. deren Schlitze eingreifen kann.

Erfindungsgemäß sind die Befestigungsmittel mit Klemmmitteln ausgestattet, um in dem auf den Klemmabschnitt aufgesetzten Zustand gegenüber diesem fixiert werden zu können. Eine besonders einfache Ausführung sieht dabei vor, dass das Befestigungsmittel im Bereich des Schlitzes mit einer Klemmschraube versehen ist, die im aufgesetzten Zustand gegen den im Schlitz angeordneten Klemmabschnitt schraubbar ist. Anders als beispielsweise bei einer zweiteiligen Rohrschelle, die an einem rohrförmigen Träger zu befestigen ist, genügt es hier, die Klemmschraube anzuziehen, um das Befestigungselement sicher an der Schiene zu befestigen. Vorzugsweise ist das Befestigungselement einteilig ausgebildet, um die Teile-Zahl zu reduzieren.

Zur Verbindung des Befestigungselements mit dem Bandkörper umfasst das Verbindungsmittel vorzugsweise spezielle Befestigungsmittel, mit denen der Bandkörper unmittelbar oder unter Zwischenschaltung einer Höhenverstellung mit dem Befestigungsmittel verbindbar ist. Die Höhenverstellung kann federvorgespannt sein und beispielsweise zwei relativ zueinander in Höhenrichtung Z verschiebliche (vorzugsweise in unterschiedlichen Verschiebepositionen gegeneinander verspannbare) Teile umfassen, wobei eines der Teile am Befestigungselement und das andere am Bandkörper befestigt ist. Mithilfe der Höhenverstellung kann ein auf die Schienen aufgesetzter Bandkörper in einem (vorzugsweise nur wenige Millimeter umfassenden) Höhenbereich notfalls noch nachjustiert werden, um das Obertrum des Bandkörpers relativ zur Höhe eines benachbarten Obertrums genau auszurichten.

Die Ausrichtung eines Bandkörpers mithilfe der Schienen ist dann besonders effektiv, wenn das erfindungsgemäße Fördersystem wenigstens zwei in Förderrichtung hintereinander angeordnete Bandkörper mit gleicher Bauhöhe umfasst, die im Wesentlichen auf der gleichen Höhe positioniert werden sollen. Die Oberkante der Schienen, die sich entlang der Förderrichtung und vorzugsweise über die Gesamtlänge der beiden hintereinander liegenden Bandkörper erstreckt, liegt dabei auf einer (durch die Montage der Schienen bereits vorgegebenen) und vorzugsweise konstanten Oberkantenhöhe. Die mehreren Bandkörpern gemeinsam dienenden Schienen sind durchgehend entlang der Bandkörper ausgebildet in dem Sinne, dass jede Schiene in Förderrichtung X mindestens so lang ist, dass wenigstens ein, vorzugsweise alle mit den Bandkörpern verbundenen Befestigungsmittel daran angreifen können.

Beide Bandkörper können auf die Schienen aufgesetzt und gegebenenfalls dort festgeklemmt werden. Eventuell noch bestehende geringe Höhenunterschiede der beiden Bandkörper zueinander können durch eine zuvor beschriebene Höhenverstellung ausgeglichen werden. (An Längspositionen der Schienen, an denen keine Befestigungselemente anzuordnen sind, kann der Klemmabschnitt mit seiner Oberkante auch unterbrochen bzw. auf einem höheren oder tieferen Höhenniveau liegen. Bevorzugt sind die Schienen jedoch mit einer geraden, ununterbrochenen Oberkante entlang des Fördersystems ausgebildet).

Vorzugsweise umfasst das Fördersystem wenigstens eine am Klemmabschnitt verschiebliche und fixierte Positionierhilfe, mit welcher die X-Position eines mit der Positionierhilfe zusammenwirkenden Befestigungsmittels einfach und wiederholbar festgelegt werden kann. Die Positionierhilfe wirkt dabei als Anschlag. Bevorzugt umfasst die Positionierhilfe eine das Befestigungsmittel aufnehmende, nach oben offene Tasche. Beim Aufsetzen des Befestigungsmittels auf die Schiene greift es gleichzeitig in die Tasche ein, wodurch eine Längsverschiebung des Befestigungsmittels in Förderrichtung X formschlüssig unterbunden wird. Dadurch kann ein (z.B. zu Reinigungszwecken) vorübergehend aus dem Fördersystem herausgenommener Bandkörper wieder exakt an seiner vorherigen X-Position eingesetzt werden, die durch die auf der Schiene verbliebene Positionierhilfe festgelegt ist.

Die Positionierhilfe kann, ähnlich wie das Befestigungsmittel, einen nach unten offenen Schlitz aufweisen, sodass es sie den Klemmabschnitt der Schiene aufgesetzt werden kann und diese dann beidseitig umgreift. Über Klemmmittel, beispielsweise eine gegen die Schiene wirkende Klemmschraube, kann die Positionierhilfe in ihrer jeweiligen X-Position an der Schiene fixiert werden. Der Bereich des Befestigungsmittels, der mit der Tasche der Positionierhilfe zusammenwirkt, kann komplementär zu dieser ausgebildet sein, um eine weitgehend spielfreie Positionierung des Befestigungsmittels zu gewährleisten. Ein zylinderförmiges Befestigungsmittel könnte entsprechend in eine dazu passende Tasche der Positionierhilfe eingreifen.

Eine besonders kompakte Bauform des erfindungsgemäßen Fördersystems ergibt sich, wenn sich der Rahmen des Bandkörpers und/oder eine Höhenverstellung und/oder das Befestigungsmittel und/oder eine Positionierhilfe vollständig innerhalb des von Obertrum und Untertrum bestimmten Höhenabschnitts (H) erstreckt, sodass sich die Elemente zur Befestigung des Bandkörpers an den Schienen im Wesentlichen horizontal bzw. in Querrichtung Y vom Bandkörper nach außen erstrecken. Unterhalb des Bandkörpers sind keine solchen Elemente angeordnet und der Zugang in diesen Bereich wird nicht versperrt. Auch die Befestigungselemente selbst sind besser erreichbar. Zwischen den Schienen und dem Bandkörper eventuell auftretende Kräfte sind - neben der Gewichtskraft der Bandkörper in Höhenrichtung Z - im Wesentlichen gut beherrschbare Zug- oder Druckkräfte in Querrichtung Y, ohne dass signifikante Biegemomente im Bandkörper erzeugt werden.

In einer alternativen Ausführungsform erstrecken sich die Befestigungsmittel vom Rahmen des Bandkörpers im Wesentlichen senkrecht auf oder ab, um dann unterhalb oder oberhalb des Höhenabschnitts H an den Schienen anzugreifen. Beim Klemmen der Befestigungsmittel gegen die Schienen könnten zwar aufgrund des vertikalen Abstands zwischen Klemmposition und Bandkörper Biegemomente im Bandkörper auftreten, und der Zugang in den Bereich unterhalb der Bandkörper würde durch die enger anliegenden Schienen erschwert. Auch die Montage oder der Austausch eines Wägebandkörpers würde durch die beengten Verhältnisse zusätzlich erschwert. Andererseits gestattet diese Ausführungsform eine noch schmalere Bauart des Fördersystems.

Das Fördersystem erhält durch seine erfindungsgemäße Ausführung eine besondere Stabilität, da insbesondere die Schienen besonders steif sind gegenüber einem Biegemoment um eine Achse in Querrichtung Y. Mithilfe der Bandkörper lassen sich aber auch die Schienen zu beiden Seiten der Bandkörper gegen Querkräfte stabilisieren. Deren Klemmabschnitte werden erfindungsgemäß durch einen zwischen Obertrum und Untertrum hindurchgeleiteten Kraftfluss in Querrichtung Y gegeneinander abgestützt. Dies kann insbesondere über den zwischen Obertrum und Untertrum liegenden Rahmen des Bandkörpers erfolgen. Der Bandkörper selbst dient also zur Übertragung von Kräften in Y-Richtung. Auf zusätzliche Querverbindungen, die im Stand der Technik beispielsweise unterhalb des Bandkörpers in Querrichtung Y hindurchgeführt werden (um Querkräfte zu übertragen oder den Bandkörper selbst in Höhenrichtung Z zu stützen), kann daher vorteilhaft verzichtet werden.

Die Schienen des Fördersystems sind vorzugsweise zur Aufnahme eines in die Schienen einhängbaren Befestigungswinkels ausgebildet, wobei der Befestigungswinkel die Anordnung unterschiedlicher Komponenten (Lichtschranken, Behälter etc.) entlang des Fördersystems ermöglicht. Der Befestigungswinkel kann die Schiene im eingehängten Zustand im Bereich des Klemmabschnitts übergreifen, ohne zusätzlich befestigt oder geklemmt werden zu müssen. Der Befestigungswinkel kann dazu an einem oberen Bereich einen zum Klemmabschnitt der Schienen komplementären Schlitz aufweisen mit der gleichen Funktionalität, wie dies für das Befestigungsmittel bereits beschrieben wurde. Denkbar ist es alternativ auch, den Befestigungswinkel an einem unteren, vorzugsweise abgewickelten Abschnitt der Schiene einzuhängen und mit einem Befestigungsmittel zu verbinden (insbesondere mittels Klemmschraube zu verschrauben), welches oben auf dem Klemmabschnitt der Schiene angeordnet ist, vorzugsweise aber nicht zugleich mit einem Bandkörper verbunden ist. Die Befestigungswinkel lassen sich in Förderrichtung X entlang der Schienen beliebig verschieben und positionieren.

Eine vorteilhafte Ausführungsform der Erfindung umfasst einen oder mehrere Bandkörper sowie zusätzlich einen Wägebandkörper, der von einer Wägezelle getragen wird. Die Wägezelle ist nicht an den Schienen, sondern an einem Untergestell des Fördersystems abgestützt, wobei sich der Wägebandkörper in Förderrichtung X an einen der beiden Bandkörper anschließt und vorzugsweise zwischen zwei auf den Schienen abgestüzten Bandkörpern angeordnet ist. Das Gewicht eines Produktes, welches dem Wägebandkörper von einem der angrenzenden Bandkörper zugeführt wird, wird über die Wägezelle erfasst. Die Schienen des erfindungsgemäßen Fördersystems erstrecken sich in Förderrichtung X bevorzugt entlang der gesamten Anordnung der Bandkörper, sodass die beiden Bandkörper stromaufwärts und stromabwärts des Wägebandkörpers auf die Klemmabschnitte der gleichen Schienen aufgesetzt werden können. Über gegebenenfalls vorzusehende Höhenverstellungen an den Bandkörpern können diese auf die Höhe des Wägebandkörpers feinjustiert werden, um den stoß- und ruckfreien Übergang des Produktes auf das Wägeband und davon herunter sicherzustellen.

Vorzugsweise ist der Wägebandkörper mit (zweckmäßigerweise werkzeuglos bzw. manuel bedienbaren) Verriegelungsmitteln lösbar an einer Lastplatte der Wägezelle befestigbar. Am Rahmen des Wägebandkörpers sind dazu seitlich in Querrichtung Y abragende Zapfen angeordnet. Diese können jeweils in eine Nut eines zugehörigen Nutelements eingeschoben werden, welches an der Lastplatte angeordnet ist. Bevorzugt sind vier auf den Ecken eines Rechtecks angeordnete Nutelemente auf der Lastplatte vorgesehen mit entsprechend an dem Wägebandkörper positionierten zugehörigen Zapfen. Die Einschubrichtung, in der die Zapfen und mit ihnen der Wägebandkörper durch jeweils eine Einschuböffnung in die Nuten einschiebbar ist, verläuft vorzugsweise senkrecht bzw. entgegen der Höhenrichtung Z abwärts (in der gleichen Richtung sind erfindungsgemäß auch die Bandkörper auf die Schienen aufsetzbar).

Die Verriegelungsmittel zur Fixierung des Wägebandkörpers an der Lastplatte sind in einer Ausführungsform dazu ausgebildet, nach dem Einschieben eines Zapfens die Nut relativ zur Einschubrichtung zu verschwenken (vorzugsweise in einer X-Z-Ebene), sodass eine Bewegung des Zapfens in oder entgegen der Einschubrichtung nicht mehr möglich ist.

Alternativ können die Verriegelungsmittel dazu ausgebildet sein, die Einschuböffnung mit einem Schwenkelement wahlweise zu verschließen oder freizugeben. Vorzugsweise ist die Nut dazu in einem Vorsprung des Nutelements ausgebildet, der eine zylindrisch um eine in Querrichtung Y verlaufende Achse ausgeformte Außenfläche aufweist. Das Schwenkelement ist dabei als eine die Außenfläche des Vorsprungs teilweise umgreifende, um die Achse schwenkbare, kreisbogenförmige Klammer ausgebildet, die je nach Schwenklage die Einschuböffnung verdeckt oder mit einer vom Vollkreis ausgesparten Lücke der Klammer freigibt.

Die Schienen des erfindungsgemäßen Fördersystems gestatten es vorteilhaft, Bandkörper mit daran bereits montierten und vorjustierten Befestigungsmitteln für die Endmontage bereitzustellen, sodass diese dann nur noch auf die Schienen aufgesetzt werden müssen, um bereits die richtige Höhenlage einzunehmen. Dies reduziert den Justage-Aufwand. Auch das Entnehmen einzelner Bandkörper zu Wartungs- oder Reinigungsarbeiten und das anschließende Einsetzen kann entsprechend schnell und einfach ohne nochmalige Justage erfolgen.

Die Schienen eignen sich als Baukastensystem zur einfachen Befestigung unterschiedlichster Komponenten (Bandkörper, Lichtschranken, Behälter, Auswerfer etc.) entlang des Fördersystems, wobei die Schienen mit ihrer Oberkante eine Referenzhöhe innerhalb des Fördersystems bilden. In Kenntnis dieser Referenzhöhe, gegebenenfalls unter Zwischenschaltung einer Höhenverstellung, können die verschiedenen Komponenten noch vor dem Einbau in das Fördersystem mit passenden Befestigungsmitteln versehen und so eingestellt werden, dass durch das Aufsetzen auf die Schienen die beabsichtigte Sollposition eingenommen wird. Nur wenige, modular miteinander kombinierbare Gleichteile (insbesondere Befestigungsmittel, Bandkörper und Schienen) sind für die Herstellung eines erfindungsgemäßen Fördersystems erforderlich, was die Lagerhaltungskosten reduziert. Insbesondere das Funktionsprinzip der Befestigungsmittel in Zusammenwirkung mit den Schienen bleibt auch für unterschiedliche Komponenten im Sinne eines modularen Befestigungssystems jeweils gleich.

Das Baukastensystem ist in unterschiedlichen Breiten, Längen und Höhen verwendbar, wobei lediglich die Geometrie und Positionierung der Schienen anzupassen ist.

Zugleich schützen die Schienen (vorzugsweise in metallischer Ausführung), wenn sie sich seitlich neben den Bandkörpern und im Wesentlichen in Höhenrichtung Z erstrecken, die Bandkörper und/oder eine zwischen den Schienen angeordnete Wägezelle vor Umweltbeeinflussung, wie Verschmutzung, Windeinfluss und elektromagnetischer Strahlung.

Außerdem ist es möglich, die Schienen oder ihre Oberkante als Referenzmaß für ein Verfahren zur Anordnung eines Wägebandkörpers heranzuziehen. Der Wägebandkörper wird von einer Wägezelle getragen, die ihrerseits bevorzugt nicht an den Schienen, sondern an einem Untergestell zu befestigen ist. Dennoch soll auch der Wägebandkörper (genauer: sein Obertrum) für einen stoßfreien Produktübergang mit dem Obertrum benachbarter Bandkörper fluchten. Denkbar wäre es daher, vor Anordnung des auf die Wägezelle aufzusetzenden Wägebandkörpers zunächst eine (vorzugsweise einstellbare) Höhenschablone auf die Schienen aufzusetzen, die sich an der Oberkante der Schienen ausrichtet. Die Schablone kann dabei einen Höhenanschlag bilden, der unter Berücksichtigung der Höhenausdehnung des Wägebandkörpers auf die später gewünschte Höhenposition von dessen Obertrum abgestimmt ist. Geeignete Montagemittel an der Lastplatte der am Untergestell montierten Wägezelle sind (beispielsweise von oben) leicht zugänglich und können dann auf den Höhenanschlag der Schablone eingestellt werden. Nach Entnahme der Schablone lässt sich der Wägebandkörper unmittelbar auf die so voreingestellten Montagemittel der Lastplatte aufsetzen und befestigen, so dass das Obertrum des Wägebandkörpers automatisch auf der richtigen Höhe liegt.

Nachfolgend soll eine Ausführungsform der Erfindung anhand von Figurenbeispielen näher erläutert werden. Dabei zeigen
- Fig. 1: eine vereinfachte perspektivische Ansicht des Fördersystems der Erfindung;
- Fig. 2: einen vergrößerten Ausschnitt aus Figur 1;
- Fig. 3: ein Befestigungsmittel in Seitenansicht;
- Fig. 4: einen auf den Schienen aufgesetzten Bandkörper in Teilansicht;
- Fig. 5: ein Befestigungsmittel sowie Höhenverstellung in perspektivischer Ansicht;
- Fig. 6: eine Positionierhilfe;
- Fig. 7: einen mittels Positionierhilfe fixierten Bandkörper;
- Fig. 8: eine Seitenansicht gemäß Figur 7;
- Fig. 9a-c: Verriegelungsmittel für einen Wägebandkörper ;
- Fig. 10: einen Wägebandkörper auf einer Lastplatte;
- Fig. 11a-c: einen Befestigungswinkel;
- Fig. 12a, b: einen an eine Schiene angehängten Behälter; und
- Fig. 13: eine mittels Befestigungsmittel positionierte Lichtschranke.

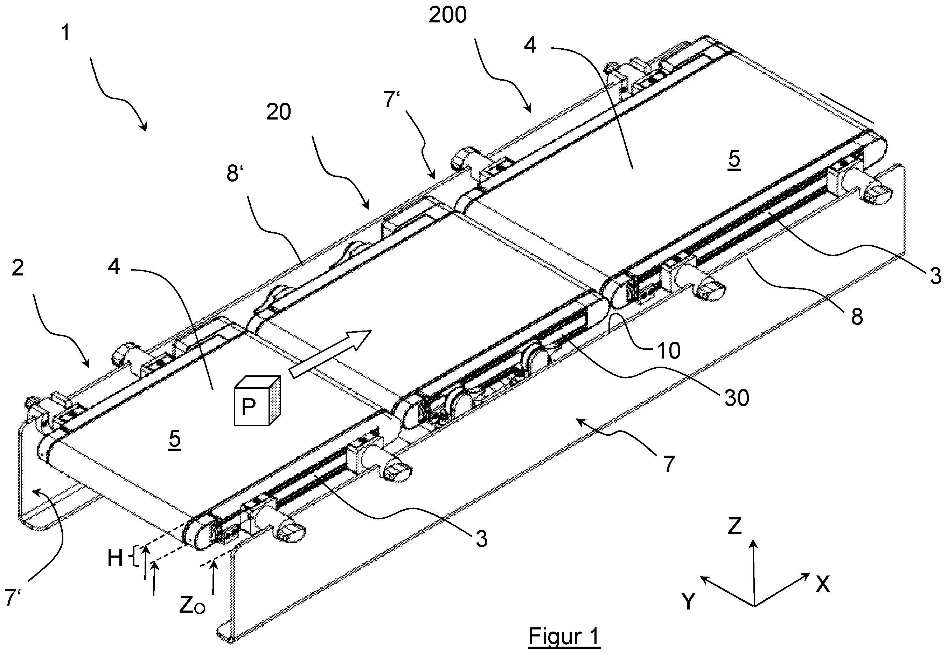

Figur 1 zeigt in vereinfachter perspektivischer Ansicht eine Ausführung eines erfindungsgemäßen Fördersystems 1. Das Fördersystem 1 erstreckt sich in einer Förderrichtung X, einer dazu orthogonalen Querrichtung Y und einer zu beiden Richtungen orthogonalen, senkrechten Höhenrichtung Z. Das Fördersystem umfasst zwei in Förderrichtung X hintereinander liegende Bandkörper 2, 200 mit einem dazwischen angeordneten Wägebandkörper 20. Jeder Bandkörper 2, 200, und auch der Wägebandkörper 20, ist mit einem Endlosband 4 ausgestattet, welches jeweils über zwei Rollen umgelenkt und von einem nicht sichtbaren Antrieb angetrieben wird, um Produkte P in die durch den Pfeil angedeutete Förderrichtung X über den Wägebandkörper 20 zu fördern. Das Endlosband 4 des Bandkörpers 2 und des Bandkörpers 200 bildet dabei jeweils ein Obertrum 5 und ein nicht näher bezeichnetes Untertrum. Obertrum 5 und Untertrum liegen in Höhenrichtung Z auf unterschiedlichen Höhenpositionen, und der zwischen beiden Höhenpositionen liegende Bereich soll als Höhenabschnitt H bezeichnet sein.

Seitlich neben den Bandkörpern 2, 200 erstrecken sich zwei gleichartige Schienen 7, 7' parallel zur Förderrichtung X, die einander in Querrichtung Y zu beiden Seiten der Bandkörper gegenüberliegen. Die Schienen haben jeweils ein L-Profil, von denen ein Schenkel in Höhenrichtung Z aufragt und die Bandkörper 2, 200 abstützt. Der untere Schenkel jeder Schiene ist an einem nicht näher dargestellten, ortsfesten Untergestell befestigt.

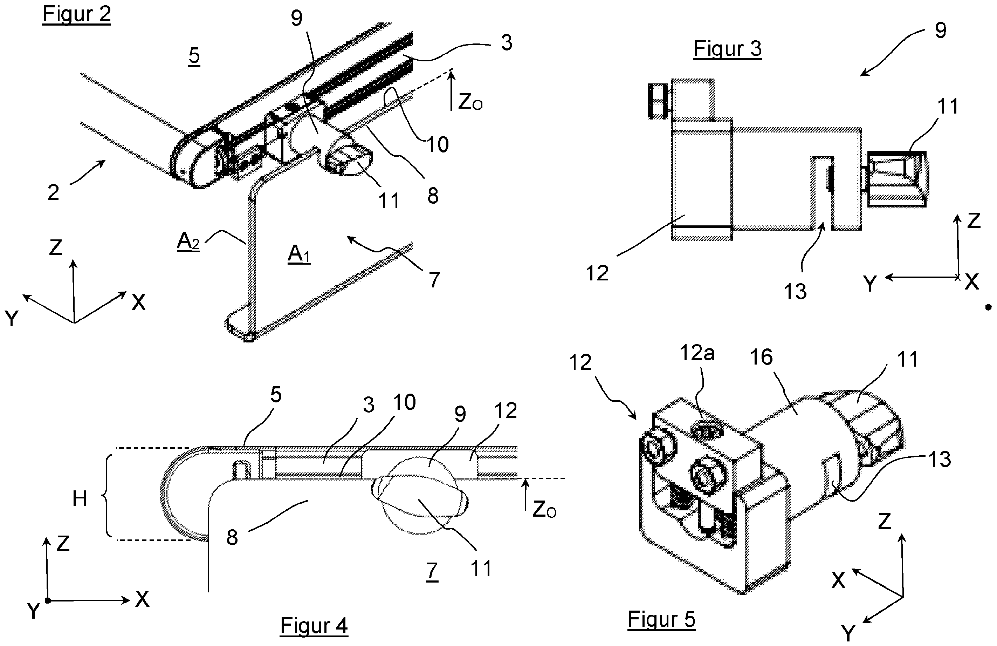

Ein oberer Abschnitt jeder Schiene ist als Klemmabschnitt 8, 8' ausgebildet, um dort geeignete Befestigungsmittel 9 anordnen und festklemmen zu können. Der Klemmabschnitt 8 wird in Querrichtung Y von zwei zueinander parallelen Seitenflächen A₁, A₂ (s. Fig. 2) begrenzt. Eine Oberkante 10 schließt den Klemmabschnitt 8 in Höhenrichtung Z nach oben ab und erstreckt sich ohne Unterbrechung in Förderrichtung X auf einer konstanten Oberkantenhöhe Z_{O}.

Wie aus den Figuren 2 bis 5 zu sehen ist, sind die Bandkörper 2, 200 mit Befestigungsmitteln 9 ausgestattet, mittels derer die Bandkörper auf die Oberkante 10 der Klemmabschnitte 8, 8' der beiden Schienen 7, 7' aufgesetzt sind. Jedes Befestigungsmittel 9 erstreckt sich dazu im Wesentlichen in Querrichtung Y und ist größtenteils aus einem Rundprofil gearbeitet. Das Befestigungsmittel 9 ist mit einem unten offenen Schlitz 13 versehen, der den Klemmabschnitt einer Schiene 7, 7' aufnimmt, wenn das Befestigungsmittel 9 von oben auf die Schiene 7, 7' aufgesetzt wird. Bevorzugt ragt der Klemmabschnitt 8 dabei in Höhenrichtung Z über die gesamte Tiefe des Schlitzes 13 in diesen hinein, so dass das Befestigungsmittel 9 von der Oberkante 10 der Schiene in Höhenrichtung Z formschlüssig abgestützt wird. Zugleich umgreift das Befestigungsmittel den Klemmabschnitt beidseitig. Ein als Flügelschraube ausgebildetes, werkzeuglos betätigbares Klemmmittel 11 dient dazu, eine Klemmkraft in Querrichtung Y zwischen dem Befestigungsmittel 9 und der Schiene 7, 7' zu erzeugen, um das Befestigungsmittel 9 an der Schiene zu fixieren.

An einem dem Schlitz 13 in Querrichtung Y abgewandten Ende ist das Befestigungsmittel am Rahmen 3 des Bandkörpers 2, 200 befestigt. Wie aus Figur 1 ersichtlich ist, sind an jedem der beiden Bandkörper 2, 200 jeweils vier solche Befestigungsmittel 9 angeordnet. In einer Aufsetzbewegung entgegen der Höhenrichtung Z kann ein in das Fördersystem 1 einzubauender Bandkörper 2, 200 so auf die Oberkante 10 der Schienen aufgesetzt werden, dass diese jeweils in die Schlitze 13 der Befestigungsmittel 9 eingreifen. Durch Betätigung der Klemmmittel 11 kann der Bandkörper leicht und schnell fixiert oder auch wieder gelöst und einfach nach oben abgehoben werden. Die Oberkante 10 gibt zugleich die Höhenposition des Bandkörpers 2, 200 bzw. des jeweiligen Obertrums 5 vor. Die beiden auf die Schienen aufgesetzten Bandkörper 2, 200 (die im vorliegenden Fall vergleichbare Höhenmaße relativ zu ihren Befestigungsmitteln aufweisen) liegen daher auf der gleichen Z-Höhe.

Zur Feinjustierung der Höhenposition jedes Bandkörpers sind an die Befestigungsmittel 9 jeweils zweiteilige Höhenverstellungen 12 (s. Fig. 5) anmontiert. Über eine senkrecht von oben bedienbare, leicht zugängliche Stellschraube 12a sind zwei relativ zueinander in Höhenrichtung Z verschiebliche und federvorgespannte Elemente bezüglich ihres Z-Abstandes einstellbar. Eines der Elemente ist am Rahmen 3 des Bandkörpers angeordnet, während das andere Element mit dem Befestigungsmittel 9 verbunden ist. Ein solcher auf die Schienen aufgesetzter Bandkörper, wie er beispielsweise in Figur 4 in Teilansicht dargestellt ist, kann daher mittels der Höhenverstellung 12 noch feinjustiert werden, um die endgültige Höhenposition des Obertrums 5 genau einzustellen.

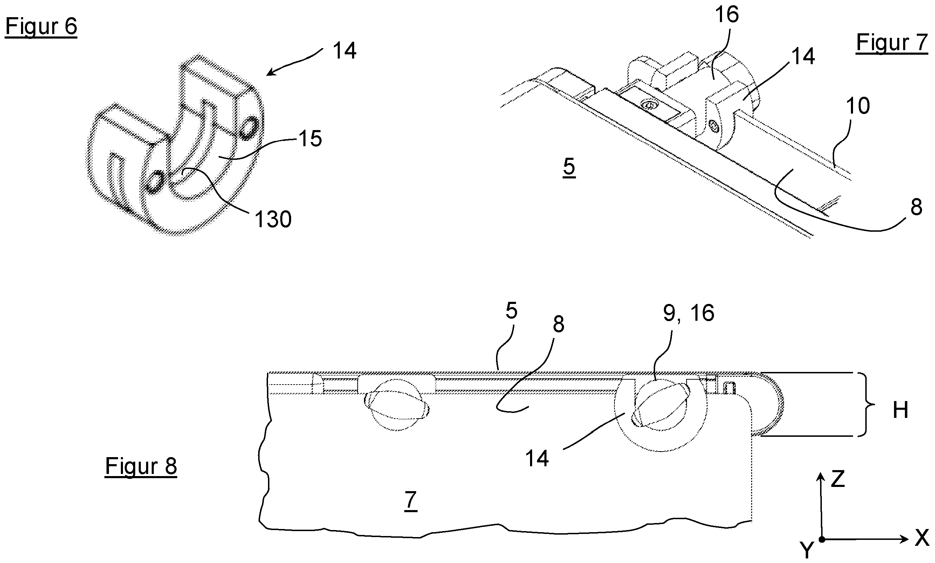

Figur 6 zeigt eine Positionierhilfe 14, mit der die Position eines Befestigungsmittels 9 entlang der Schiene 7, 7' bzw. ihrer Oberkante 10 vorgegeben werden kann. Die Positionierhilfe ist aus einer Scheibe eines Rundprofils herausgearbeitet und umfasst eine Tasche 15 mit teilweise zylinderförmiger Wandung. Ferner ist ein nach unten offener Schlitz 130 vorgesehen, so dass die Positionierhilfe 14 mit diesem Schlitz 130 auf den Klemmabschnitt 8 einer Schiene 7, 7' aufgesetzt werden kann und den Klemmabschnitt dabei beidseitig umgreift, ähnlich wie das in Figur 3 dargestellte Befestigungsmittel 9. Über nicht näher dargestellte Klemmmittel (z.B. zwei Madenschrauben) kann die Positionierhilfe 14 in einer ausgewählten X-Position entlang der Schiene 7, 7' fixiert werden.

Die Figuren 7 und 8 verdeutlichen, dass ein Bandkörper 2, 200 mit seitlich davon abragenden Befestigungsmitteln nach dem Vorbild der Figuren 2 bis 5 so auf die Schienen 7, 7' abgesenkt werden kann, dass wenigstens eines der Befestigungsmittel 9 mit einem zylinderförmigen Abschnitt 16 in die komplementär dazu ausgebildete Tasche 15 einer zugehörigen und zuvor an der Schiene positionierten Positionierhilfe 14 eingreift und gleichzeitig die Oberkante 10 des Klemmabschnitts 8 umgreift. Bereits eine einzige solche Positionierhilfe kann genügen, um die X-Position des Bandkörpers 2, 200 ausreichend festzulegen.

Wie unter anderem in Figur 1 und 4 zu sehen ist, sind der Rahmen 3 des Bandkörpers, das Befestigungsmittel 9 und die Höhenverstellung 12 (vorzugsweise auch eine dort nicht dargestellte Positionierhilfe 14) innerhalb des Höhenabschnitts H angeordnet. Die Befestigung des Bandkörpers 2, 200 an den Schienen 7, 7' nimmt daher in Höhenrichtung Z wenig Raum ein und ist darüber hinaus von oben gut zugänglich. Die Befestigungsmittel erstrecken sich im Wesentlichen in Querrichtung Y vom Rahmen 3 des Bandkörpers 2, 200 nach außen, ohne diesen in Höhenrichtung H wesentlich zu über- oder unterragen. Die Befestigungskonstruktion wird auch dadurch besonders einfach und Platz sparend. Zweckmäßigerweise liegt die Oberkante 10 mit ihrer Oberkantenhöhe Z_{O} ebenfalls innerhalb des Höhenabschnitts H.

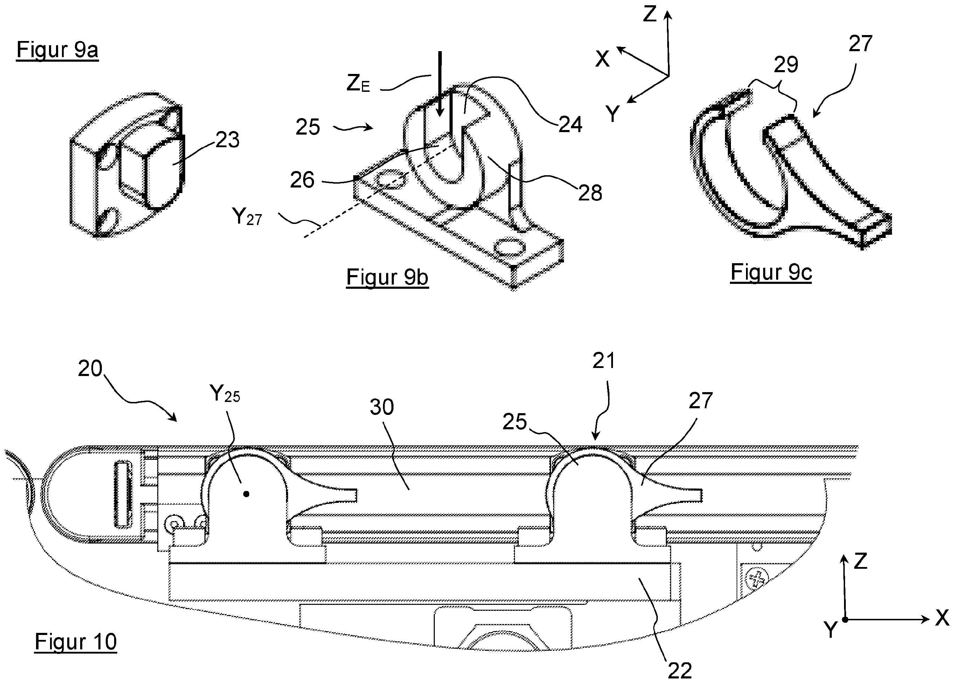

Der in Figur 1 und 10 gezeigte Wägebandkörper 20 sitzt auf der Lastplatte 22 einer nicht näher dargestellten Wägezelle, die ihrerseits von einem Untergestell getragen wird, welches unterhalb der Bandkörper 2, 20, 200 in Figur 1 angeordnet und daher nicht zu sehen ist. Eine schematische Seitenansicht der Befestigung des Wägebandkörpers 20 an der Lastplatte 22 ist in Figur 10 zu sehen. Am Rahmen 30 des (zunächst noch nicht mit der Lastplatte verbundenen) Wägebandkörpers 20 sind dazu einzelne Elemente mit Zapfen 23 (s. Fig. 9a) so befestigt, dass die Zapfen 23 in Querrichtung Y seitlich vom Rahmen 30 abragen. An der Lastplatte 22 sind zugehörige Nutelemente 25 befestigt mit einer in Höhenrichtung Z nach oben offenen Nut 26 zur Aufnahme jeweils eines Zapfens 23. Der Wägebandkörper 20 ist mit seinen Zapfen 23 in einer Einschubrichtung Z_{E} (im vorliegenden Fall entgegen der Höhenrichtung Z) in Richtung auf die Lastplatte 22 absenkbar, so dass jeder Zapfen 23 durch eine Einschuböffnung 24 in eine zugehörige Nut 26 eines Nutelements 25 eingeschoben wird bis an einen nicht näher dargestellten Anschlag.

Jedes mit der Lastplatte 22 befestigte Nutelement 25 umfasst einen um eine Achse Y₂₅ zylinderförmig ausgebildeten Vorsprung 28, in dem die jeweilige Nut 26 ausgebildet ist (s. Fig. 9b). Ein in Figur 9c separat dargestelltes, im Wesentlichen kreisbogenförmiges Schwenkelement 27 umgreift den zylinderförmigen Vorsprung 28 mit einer komplementär dazu ausgebildeten Innenfläche, sodass es um die Achse Y₂₅ schwenkbar ist. Entlang des Kreisbogens ist am Schwenkelement 27 eine Aussparung 29 vorgesehen, welche je nach Schwenkposition die Einschuböffnung 24 am Nutelement 25 überdeckt (verschließt) oder freigibt, so dass durch Verschwenken des Schwenkelements 27 ein in die Nut des Nutelements 25 eingeführter Zapfen in seiner Lage fixiert (Verriegelungsposition) oder zur Entnahme freigegeben wird (Freigabeposition). Vorzugsweise sind Zapfen 23 und Schwenkelement 27 so ausgebildet, dass der Zapfen 23 in der Verriegelungsposition vom Schwenkelement 27 mit einer Klemmkraft beaufschlagt wird, um den Wägebandkörper 20 spielfrei an der Lastplatte 22 zu befestigen.

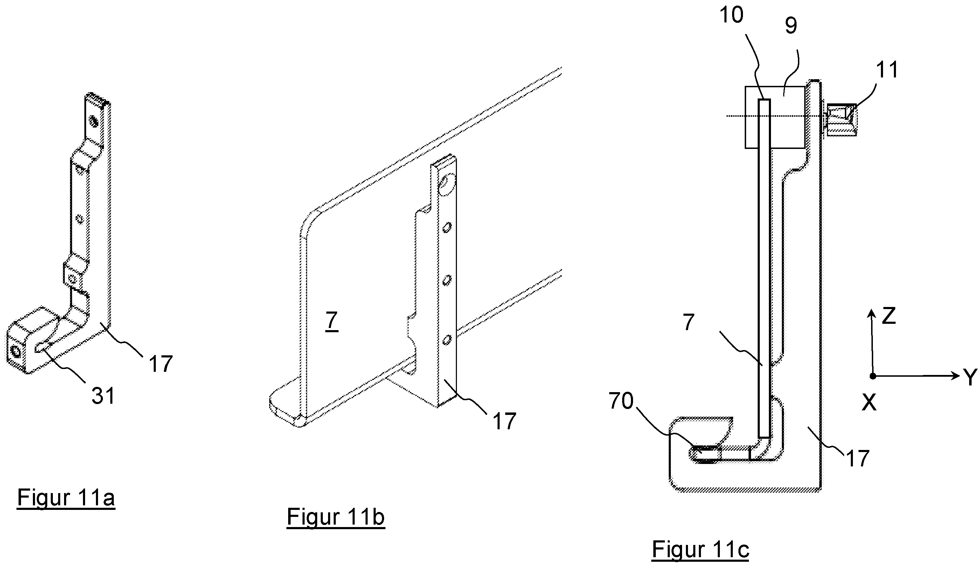

Die Figuren 11a bis 11c zeigen einen Befestigungswinkel 17 zur Anordnung an einer Schiene 7, 7'. Am Befestigungswinkel 17 können beispielsweise Behälter oder andere Komponenten befestigt werden, ohne dass dafür eine separate Haltekonstruktion erforderlich ist. Der Befestigungswinkel 17 hat dazu eine im Wesentlichen L-förmige Kontur. An einem unteren, kürzeren Schenkel des Befestigungswinkels 17 ist ein Einschnitt 31 vorgesehen zur Aufnahme eines Schienenabschnitts 70, der von einem Schenkel einer ebenfalls L-förmigen Schiene 7 gebildet wird. In einem an der Schiene 7 montierten Zustand umgreift der Befestigungswinkel 17 mit seinem Einschnitt 31 den Schienenabschnitt 70 und kann dadurch Kräfte in Höhenrichtung Z aufnehmen. Zugleich umgreift der Befestigungswinkel den gesamten unteren Schenkel der Schiene 7 in Querrichtung Y, so dass auch Querkräfte vom Befestigungswinkel in die Schiene eingeleitet werden können. An einem oberen Endabschnitt des Befestigungswinkels ist dieser über ein auf die Oberkante 10 der Schiene aufgesetztes Befestigungsmittel 9 (nach dem Vorbild der Figur 3, jedoch ohne Höhenverstellung 12) mit einem Klemmmittel 11 gegen die Schiene geklemmt.

Alternativ zum unteren Einschnitt 31 kann der Befestigungswinkel auch an einem Vorsprung seines nach oben aufragenden Schenkels einen nach unten offenen, schlitzförmigen Einschnitt aufweisen, um den Schlitz von oben auf den Klemmabschnitt der Schiene aufschieben zu können. Der Befestigungswinkel kann dann an der Schiene hängen.

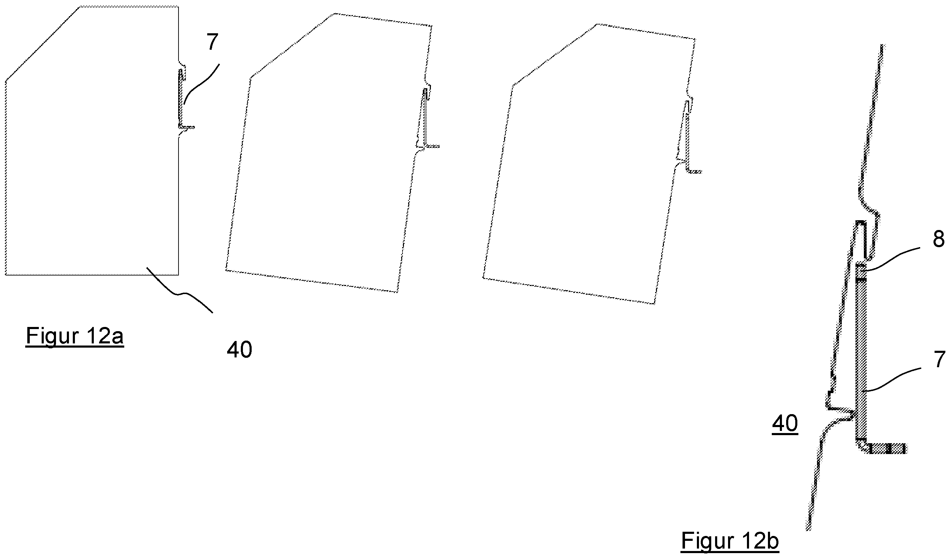

Figur 12 zeigt in vereinfachter Seitenansicht einen Behälter 40, der in eine Schiene 7 eingehängt ist. Die Schiene 7 ist im Querschnitt (orthogonal zur Förderrichtung X) dargestellt. Figur 12b verdeutlicht, dass dazu in die Behälterseite eine komplementär zur Schiene 7 ausgebildete Kontur eingebracht (beispielsweise gefräst) wurde, wobei ein oberster Abschnitt der Kontur den Klemmabschnitt 8 der Schiene 7 übergreift. Der Behälter 40 lässt sich dadurch in einer den Behälter schwenkenden Einsetzbewegung, wie sie in Figur 12a von rechts nach links dargestellt ist, leicht in die Schiene 7 einhängen. Zusätzliche Befestigungsmittel sind vorteilhafterweise nicht erforderlich, und die Position des Behälters entlang der Förderrichtung X lässt sich durch Verschieben des Behälters 40 entlang der Schiene 7 frei wählen.

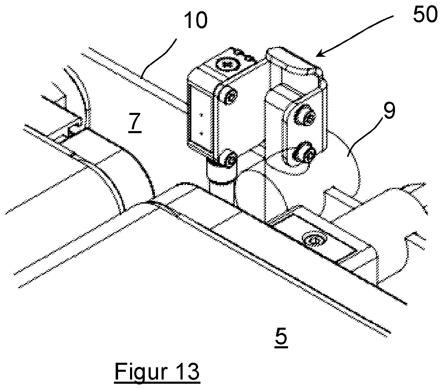

Figur 13 zeigt eine weitere vorteilhafte Anwendung der Schienen des erfindungsgemäßen Fördersystems.

Eine Lichtschranke 50 ist dabei mit einem Befestigungsmittel 9 verbunden. Das Befestigungsmittel 9 umgreift mit seinem darin ausgebildeten Schlitz die Oberkante 10 der Schiene 7 in der zuvor bereits beschriebenen Weise. Die Lichtschranke (ebenso wie andere Sensoren sowie Pusher, Auswerfer oder sonstige Komponenten und Betriebsmittel) lassen sich in Verbindung mit Befestigungsmitteln 9 modulartig und leicht von oben auf die Schiene 7 aufsetzen und positionieren.

### Bezugszeichenliste

| | | | |
|---|---|---|---|
| 1 | Fördersystem | 24 | Einschuböffnung |
| 2, 200 | Bandkörper | 25 | Nutelement |
| 3, 30 | Rahmen | 26 | Nut |
| 4 | Endlosband | 27 | Schwenkelement |
| 5 | Obertrum | 28 | Vorsprung |
| 7, 7' | Befestigungsschiene, Schiene | 29 | Aussparung |
| 8, 8' | Klemmabschnitt | 31 | Einschnitt |
| 9 | Befestigungsmittel | 40 | Behälter |
| 10 | Oberkante | 50 | Lichtschranke |
| 11 | Klemmmittel | 70 | Schienenabschnitt |
| 12 | Höhenverstellung | 130 | Schlitz |
| 12a | Stellschraube | P | Produkt |
| 13 | Schlitz | Y₂₅ | Achse des Nutelements 25 |
| 14 | Positionierhilfe | Z_{E} | Einschubrichtung |
| 15 | Tasche | Zo | Oberkantenhöhe |
| 16 | Abschnitt | A₁, A₂ | Seitenfläche |
| 17 | Befestigungswinkel | H | Höhenabschnitt |
| 20 | Wägebandkörper | X | Förderrichtung |
| 21 | Verriegelungsmittel | Y | Querrichtung |
| 22 | Lastplatte | Z | Höhenrichtung |
| 23 | Zapfen | | |

## Patentansprüche

1. Fördersystem (1), umfassend wenigstens einen Bandkörper (2, 200),
a) wobei sich das Fördersystem (1) in einer Förderrichtung (X), einer dazu orthogonalen Querrichtung (Y) und einer zu beiden Richtungen (X, Y) orthogonalen Höhenrichtung (Z) erstreckt, und
b) wobei der Bandkörper (2) wenigstens zwei von einem Rahmen (3) getragene Umlenkelemente, bevorzugt Rollen, aufweist, die ein um die Umlenkelemente geführtes Endlosband (4) tragen, welches dabei ein Obertrum (5) und ein Untertrum ausbildet, um auf dem Obertrum (5) Produkte (P) in Förderrichtung (X) zu transportieren, und wobei die jeweiligen Höhenpositionen des Obertrums (5) und des Untertrums in Höhenrichtung (Z) zwischen sich einen Höhenabschnitt (H) definieren, und
c) wobei das Fördersystem (1) zwei Befestigungsschienen (7, 7') aufweist, die sich in einer Längsrichtung parallel zur Förderrichtung (X) des Fördersystems (1) erstrecken,
d) wobei jede Schiene (7, 7') an ihrem oberen Endbereich einen sich in Längsrichtung (X) erstreckenden Klemmabschnitt (8) aufweist, der in Querrichtung (Y) von zwei zueinander parallelen, in X-Z-Richtung verlaufenden Seitenflächen (A₁, A₂) begrenzt wird, wobei ein auf den Klemmabschnitt (8) aufgesetztes und mit dem Bandkörper verbundenes Befestigungsmittel (9) des Fördersystems (1) lösbar mit dem Klemmabschnitt (8) verbindbar ist.
**dadurch gekennzeichnet,**
**dass** das Befestigungsmittel (9), welches vorzugsweise rechteckig oder zylindrisch um eine in Querrichtung (Y) verlaufende Achse ausgebildet ist, aufweist:
e) einen Schlitz (13) zum Aufsetzen auf den Klemmabschnitt (8), und
f) Klemmmittel (11), insbesondere eine Schraube oder einen Klemmhebel, die, vorzugsweise im Schlitz (13), mit dem Klemmabschnitt (11) zusammenwirken, um das Befestigungsmittel (9) an der Schiene (7, 7') lösbar festklemmen zu können.

2. Fördersystem (1) nach Anspruch 1, **dadurch gekennzeichnet, dass** der Klemmabschnitt (8) gebildet wird mit einer in Z-Richtung aufragenden, vorzugsweise metallischen Platte, insbesondere als Schenkel einer Schiene (7, 7') mit L- oder U-Profil.

3. Fördersystem (1) nach Anspruch 1 oder 2, umfassend wenigstens zwei in Förderrichtung unmittelbar oder beabstandet hintereinander auf die Schienen (7, 7') aufgesetzte Bandkörper (2, 200), wobei die Schienen (7, 7') jeweils eine die Klemmabschnitte (8) in Z-Richtung nach oben begrenzende, vorzugsweise durchgehende Oberkante (10) aufweisen, und wobei die Oberkanten (10) beider Schienen (7, 7') in Förderrichtung (X) auf einer konstanten, vorzugsweise für beide Schienen gleichen, Oberkantenhöhe (Z_{O}) liegen, und wobei sich jede Schiene (7, 7') in Förderrichtung (X) durchgehend entlang der wenigstens zwei Bandkörper (2, 200) erstreckt.

4. Fördersystem (1) nach einem der vorigen Ansprüche, **dadurch gekennzeichnet, dass** das Befestigungsmittel (9)
Verbindungsmittel aufweist, über welche der Rahmen (3) des Bandkörpers (2) mit dem Befestigungsmittel (9) unmittelbar oder unter Zwischenschaltung einer Höhenverstellung (12) verbindbar ist.

5. Fördersystem (1) nach einem der vorigen Ansprüche, **dadurch gekennzeichnet, dass** sich die Oberkante (10) des Klemmabschnitts (8) auf einer Höhe in Z-Richtung erstreckt, die innerhalb des Höhenabschnitts (H) liegt.

6. Fördersystem (1) nach einem der vorigen Ansprüche, **dadurch gekennzeichnet, dass** wenigstens eine am Klemmabschnitt (8) verschiebliche und fixierbare Positionierhilfe (14) vorgesehen ist, die mit dem auf den Klemmabschnitt (8) aufgesetzten Befestigungsmittel (9) zusammenwirkt, um die Position des Befestigungsmittels (9) und damit des Bandkörpers (2, 200) entlang der Förderrichtung (X) festzulegen.

7. Fördersystem (1) nach dem vorhergehenden Anspruch, **dadurch gekennzeichnet,**
**dass** die Positionierhilfe (14) eine das Befestigungsmittel (9) aufnehmende, nach oben offene Tasche (15) aufweist, in die ein - vorzugsweise komplementär zu der Tasche geformter - Abschnitt (16) des Befestigungsmittels (9) eingreift.

8. Fördersystem (1) nach dem vorhergehenden Anspruch, **dadurch gekennzeichnet, dass** die Positionierhilfe (14) einen nach unten offenen Schlitz (130) aufweist, der auf den Klemmabschnitt (8) aufgesetzt ist, wobei sich die Tasche (15) in Querrichtung (Y) zu beiden Seiten des Klemmabschnitts (8) erstreckt.

9. Fördersystem (1) nach einem der vorhergehenden Ansprüche, **dadurch gekennzeichnet, dass** sich der Rahmen (3) des Bandkörpers (2, 200) und/oder eine Höhenverstellung (12) und/oder das Befestigungsmittel (9) und/oder eine Positionierhilfe (14) und/oder deren Abschnitt (16) vollständig innerhalb des Höhenabschnitts (H) erstreckt.

10. Fördersystem (1) nach einem der vorhergehenden Ansprüche, **dadurch gekennzeichnet, dass** sich das Befestigungsmittel (9) vom Rahmen (3) im Wesentlichen in Querrichtung (Y) zu einer Schiene (7, 7') erstreckt und/oder innerhalb des Höhenabschnitts (H)
a) an dem Klemmabschnitt (8) fixiert ist und/oder
b) auf einer Oberkante (10) der Schiene (7, 7') aufliegt.

11. Fördersystem (1) nach einem der vorhergehenden Ansprüche, **dadurch gekennzeichnet, dass** die Klemmabschnitte (8, 8') der beiden Schienen (7, 7') zu beiden Seiten des Bandkörpers (2) über einen zwischen Obertrum (5) und Untertrum hindurchgeleiteten Kraftfluss in Querrichtung (Y) miteinander abstützend verbunden sind, so dass insbesondere derjenige Bereich zwischen den Schienen (7, 7'), der unterhalb des Untertrums liegt, von Querverbindern frei bleiben kann.

12. Fördersystem (1) nach einem der vorhergehenden Ansprüche, ferner umfassend wenigstens einen in eine der Schienen einhängbaren Befestigungswinkel (17), der die Schiene (7, 7') im eingehängten Zustand im Bereich des Klemmabschnitts (8, 8') übergreift und/oder an einem dem Klemmabschnitt (8, 8') in Höhenrichtung (Z) gegenüberliegenden unteren Schienenende untergreift.

13. Fördersystem (1) nach einem der vorhergehenden Ansprüche, ferner umfassend ein die Schienen (7, 7') tragendes Untergestell, welches sich im Wesentlichen unterhalb des wenigstens einen Bandkörpers (2, 200) erstreckt und zur Aufnahme einer Wägezelle ausgebildet ist.

14. Fördersystem (1) nach einem der vorhergehenden Ansprüche, umfassend einen in Förderrichtung (X) an einen Bandkörper (2, 200) angrenzenden, von einer Wägezelle getragenen Wägebandkörper (20), wobei die Wägezelle nicht an den Schienen (7), sondern an einem Untergestell abgestützt ist.

15. Fördersystem (1) nach einem der vorhergehenden Ansprüche, umfassend einen Wägebandkörper (20), der mit Verriegelungsmitteln (21) lösbar an einer Lastplatte (22) einer Wägezelle befestigbar ist, indem vom Wägebandkörper (20) abragende Zapfen (23) in zugehörige Nutelemente (25) der Lastplatte (22) einschiebbar sind.

## Claims

1. Conveyor system (1) comprising at least one belt frame (2, 200),
a) wherein the conveyor system (1) extends in a conveying direction (X), a transverse direction (Y) orthogonal thereto and a vertical direction (Z) which is orthogonal to both directions (X, Y), and
b) wherein the belt frame (2) comprises at least two deflection elements, preferably pulleys, which are supported by a frame (3) and which support an endless belt (4) guided around the deflection elements, wherein the endless belt forms an upper strand (5) and a lower strand in order to transport products (P) on the upper strand (5) in the conveying direction (X), and the respective vertical positions of the upper strand (5) and the lower strand define a height segment (H) between each other in the vertical direction (Z), and
c) wherein the conveyor system (1) comprises two fastening rails (7, 7') which extend in a longitudinal direction parallel to the conveying direction (X) of the conveyor system (1),
d) wherein each rail (7, 7') comprises at its upper end region a clamping segment (8) which extends in the longitudinal direction (X) and which is limited in the transverse direction (Y) by two mutually parallel side surfaces (A₁, A₂) extending in the X-Z direction, wherein a fastening means (9) of the conveyor system (1) which is placed on the clamping segment (8) and connected to the belt frame can be releasably connected to the clamping segment (8),
**characterized in that,**
the fastening means (9), which is preferably configured rectangularly or cylindrically around an axis extending in the transverse direction (Y), comprises:
e) a notch (13) for placing the fastening means onto the clamping segment (8), and
f) clamping means (11), in particular a screw or a clamping lever, which interact with the clamping segment (11), preferably in the notch (13), in order to be able to releasably clamp the fastening means (9) to the rail (7, 7').

2. Conveyor system (1) according to claim 1, **characterized in that** the clamping segment (8) is formed out of a sheet, preferably a metal sheet, which projects in the Z direction, and which in particular has the shape of an L-profile or a U-profile leg of a rail (7, 7').

3. Conveyor system (1) according to claim 1 or 2, comprising at least two belt frames (2, 200) placed on the rails (7, 7') directly one behind the other or spaced apart in the conveying direction, wherein the rails (7, 7') each comprise a preferably continuous upper edge (10) delimiting the clamping segments (8) upwards in the Z direction, and wherein the upper edges (10) of both rails (7, 7') lie in the conveying direction (X) at a constant upper edge height (Z_{O}), which is preferably the same for both rails, and wherein each rail (7, 7') extends continuously in the conveying direction (X) along the at least two belt frames (2, 200).

4. Conveyor system (1) according to one of the preceding claims, **characterized in that** the fastening means (9) comprises connecting means, via which the framework (3) of the belt frame (2) can be connected to the fastening means (9) directly or by means of an intermediate height adjustment (12).

5. Conveyor system (1) according to one of the preceding claims, **characterized in that** the upper edge (10) of the clamping segment (8) extends in the Z direction at a height within the height segment (H).

6. Conveyor system (1) according to one of the preceding claims, **characterized in that** at least one positioning aid (14) is provided which can be moved and fixed along the clamping segment (8) and which engages with the fastening means (9) placed on the clamping segment (8) in order to determine the position of the fastening means (9) and thus of the belt frame (2, 200) along the conveying direction (X).

7. Conveyor system (1) according to the preceding claim, **characterized in that** the positioning aid (14) comprises a pocket (15) open at the top and receiving the fastening means (9), the pocket being engaged by a segment (16) of the fastening means (9), wherein the segment (16) is preferably configured to complement the pocket.

8. Conveyor system (1) according to the preceding claim, **characterized in that** the positioning aid (14) comprises a slot (130) which is open at the bottom and which is placed on the clamping segment (8), the pocket (15) extending in the transverse direction (Y) at both sides of the clamping segment (8).

9. Conveyor system (1) according to one of the preceding claims, **characterized in that** the framework (3) of the belt frame (2, 200) and/or a height adjustment (12) and/or the fastening means (9) and/or a positioning aid (14) and/or the segment (16) thereof extends completely within the height segment (H).

10. Conveyor system (1) according to one of the preceding claims, **characterized in that** the fastening means (9) basically extends from the framework (3) to a rail (7, 7') in the transverse direction (Y) and/or
a) is fastened at the clamping segment (8) within the height segment (H) and/or
b) rests on an upper edge (10) of the rail (7, 7') within the height segment (H).

11. Conveyor system (1) according to one of the preceding claims, **characterized in that** the clamping segments (8, 8') of the two rails (7, 7') on both sides of the belt frame (2) are supportively connected to one another in the transverse direction (Y) via a force transmitted between the upper strand (5) and the lower strand, so that in particular that region between the rails (7, 7'), which lies below the lower strand can remain free of transverse connectors.

12. Conveyor system (1) according to one of the preceding claims, further comprising at least one fastening bracket (17) which can be suspended in one of the rails and which overlaps the rail (7, 7') in the region of the clamping segment (8, 8') in the suspended state and/or underlaps it at a lower rail end which is opposite the clamping segment (8, 8') in the vertical direction (Z).

13. Conveyor system (1) according to one of the preceding claims, further comprising a lower frame which supports the rails (7, 7'), wherein the lower frame basically extends below the at least one belt frame (2, 200) and which is configured to receive a load cell.

14. Conveyor system (1) according to one of the preceding claims, comprising a weighing belt frame (20) which is adjacent to a belt frame (2, 200) in the conveying direction (X) and which is supported by a load cell, wherein the load cell is not supported at the rails (7), but at a lower frame.

15. Conveyor system (1) according to one of the preceding claims comprising a weighing belt frame (20) which can be releasably fastened to a load plate (22) of a load cell by locking means (21), in such a way that trunnions (23) projecting from the weighing belt frame (20) can be inserted into mating recessed elements (25) of the load plate (22).

## Revendications

1. Système de transport (1), comprenant au moins un corps de bande (2, 200),
a) dans lequel le système de transport (1) s'étend dans une direction de transport (X), une direction transversale (Y) orthogonale à celle-ci et une direction verticale (Z) orthogonale aux deux directions (X, Y), et
b) dans lequel le corps de bande (2) présente au moins deux éléments de renvoi supportés par un cadre (3), de préférence des poulies, qui supportent une bande sans fin (4) guidée autour des éléments de renvoi, laquelle bande sans fin forme ainsi un brin supérieur (5) et un brin inférieur, afin de transporter des produits (P) sur le brin supérieur (5) dans la direction de transport (X), et dans lequel les positions en hauteur respectives du brin supérieur (5) et du brin inférieur dans la direction verticale (Z) définissent entre elles une section en hauteur (H), et
c) dans lequel le système de transport (1) présente deux rails de fixation (7, 7') qui s'étendent dans une direction longitudinale parallèlement à la direction de transport (X) du système de transport (1),
d) dans lequel chaque rail (7, 7') présente au niveau de sa zone d'extrémité supérieure une section de serrage (8) s'étendant dans la direction longitudinale (X), laquelle section de serrage est délimitée dans la direction transversale (Y) par deux surfaces latérales (A₁, A₂) parallèles l'une à l'autre et s'étendant dans les directions X-Z, dans lequel un moyen de fixation (9) du système de transport (1), placé sur la section de serrage (8) et relié au corps de bande, peut être relié de manière amovible à la section de serrage (8),
**caractérisé en ce**
**que** le moyen de fixation (9), lequel est de préférence réalisé sous forme rectangulaire ou cylindrique autour d'un axe s'étendant dans la direction transversale (Y), présente :
e) une fente (13) destinée à être placée sur la section de serrage (8), et
f) des moyens de serrage (11), en particulier une vis ou un levier de serrage, qui coopèrent, de préférence dans la fente (13), avec la section de serrage (11) afin de pouvoir serrer de manière amovible le moyen de fixation (9) sur le rail (7, 7').

2. Système de transport (1) selon la revendication 1, **caractérisé en ce que** la section de serrage (8) est formée avec une plaque, de préférence métallique, faisant saillie dans la direction Z, en particulier en tant que branche d'un rail (7, 7') comportant un profil en L ou en U.

3. Système de transport (1) selon la revendication 1 ou 2, comprenant au moins deux corps de bande (2, 200) placés sur les rails (7, 7') l'un derrière l'autre, directement ou à distance, dans la direction de transport, dans lequel les rails (7, 7') présentent respectivement un bord supérieur (10), de préférence continu, délimitant vers le haut les sections de serrage (8) dans la direction Z, et dans lequel les bords supérieurs (10) des deux rails (7, 7') se trouvent, dans la direction de transport (X), à une hauteur de bord supérieur (Zₒ) constante, de préférence identique pour les deux rails, et dans lequel chaque rail (7, 7') s'étend dans la direction de transport (X) de manière continue le long des au moins deux corps de bande (2, 200).

4. Système de transport (1) selon l'une des revendications précédentes, **caractérisé en ce que** le moyen de fixation (9) présente des moyens de liaison par l'intermédiaire desquels le cadre (3) du corps de bande (2) peut être relié au moyen de fixation (9) directement ou avec interposition d'un moyen de réglage en hauteur (12).

5. Système de transport (1) selon l'une des revendications précédentes, **caractérisé en ce que** le bord supérieur (10) de la section de serrage (8) s'étend à une hauteur dans la direction Z qui se situe à l'intérieur de la section en hauteur (H).

6. Système de transport (1) selon l'une des revendications précédentes, **caractérisé en ce qu'**au moins un moyen d'aide au positionnement (14) pouvant être déplacé et fixé sur la section de serrage (8) est prévu, lequel coopère avec le moyen de fixation (9) placé sur la section de serrage (8) afin de définir la position du moyen de fixation (9) et donc du corps de bande (2, 200) le long de la direction de transport (X).

7. Système de transport (1) selon la revendication précédente,
**caractérisé en ce que** le moyen d'aide au positionnement (14) présente une poche (15) ouverte vers le haut et recevant le moyen de fixation (9), dans laquelle vient en prise une section (16), de préférence de forme complémentaire à celle de la poche, du moyen de fixation (9).

8. Système de transport (1) selon la revendication précédente,
**caractérisé en ce que** le moyen d'aide au positionnement (14) présente une fente (130) ouverte vers le bas qui est placée sur la section de serrage (8), dans lequel la poche (15) s'étend dans la direction transversale (Y) de part et d'autre de la section de serrage (8).

9. Système de transport (1) selon l'une des revendications précédentes, **caractérisé en ce que** le cadre (3) du corps de bande (2, 200) et/ou un moyen de réglage en hauteur (12) et/ou le moyen de fixation (9) et/ou un moyen d'aide au positionnement (14) et/ou sa section (16) s'étendent entièrement à l'intérieur de la section en hauteur (H).

10. Système de transport (1) selon l'une des revendications précédentes, **caractérisé en ce que** le moyen de fixation (9) s'étend depuis le cadre (3) sensiblement dans la direction transversale (Y) vers un rail (7, 7') et/ou, à l'intérieur de la section en hauteur (H),
a) est fixé sur la section de serrage (8) et/ou
b) repose sur un bord supérieur (10) du rail (7, 7').

11. Système de transport (1) selon l'une des revendications précédentes, **caractérisé en ce que** les sections de serrage (8, 8') des deux rails (7, 7') de part et d'autre du corps de bande (2) sont reliées en appui entre elles dans la direction transversale (Y) par l'intermédiaire d'un flux de force passant entre le brin supérieur (5) et le brin inférieur, de sorte qu'en particulier, la zone située entre les rails (7, 7') et qui se trouve en dessous du brin inférieur peut rester exempte de liaisons transversales.

12. Système de transport (1) selon l'une des revendications précédentes, comprenant en outre au moins une équerre de fixation (17) pouvant être suspendue dans l'un des rails, laquelle recouvre le rail (7, 7') à l'état suspendu dans la zone de la section de serrage (8, 8') et/ou l'enserre par dessous à une extrémité de rail inférieure opposée à la section de serrage (8, 8') dans la direction verticale (Z).

13. Système de transport (1) selon l'une des revendications précédentes, comprenant en outre un châssis supportant les rails (7, 7'), lequel châssis s'étend sensiblement en dessous de l'au moins un corps de bande (2, 200) et est réalisé pour recevoir une cellule de pesage.

14. Système de transport (1) selon l'une des revendications précédentes, comprenant un corps de bande de pesage (20) adjacent à un corps de bande (2, 200) dans la direction de transport (X) et supporté par une cellule de pesage, dans lequel la cellule de pesage ne s'appuie pas sur les rails (7), mais sur un châssis.

15. Système de transport (1) selon l'une des revendications précédentes, comprenant un corps de bande de pesage (20) qui peut être fixé de manière amovible à une plaque de charge (22) d'une cellule de pesage à l'aide de moyens de verrouillage (21) par le fait que des tourillons (23) faisant saillie depuis le corps de bande de pesage (20) peuvent être insérés dans des éléments formant rainures (25) correspondants de la plaque de charge (22).
